# EUROPEAN PATENT APPLICATION

(11) **EP 2 305 041 A1**
(43) Date of publication of application: **06.04.2011**
(21) Application number: 10178943.6
(22) Date of filing: 23.09.2010
(51) Int. Cl.: A21C 13/02

(54) **Apparatus for leavening pieces of edible dough**

(30) Priority: 30.09.2009 IT MO20090239
(71) Applicant: C.L.M. S.r.l., 31043 Fontanelle TV (IT)
(72) Inventor: Roncadin, Renzo, 33080 Fiume Veneto (PN) (IT)
(74) Representative: Modiano, Micaela Nadia

(57) **Abstract**

An apparatus (1) for leavening pieces of dough (P) for use as food, which comprises at least one leavening compartment (2) provided with a plurality of shelves (3), with an inlet (4) for the pieces of dough (P) to be leavened and an outlet (5) for the leavened pieces, elements for transferring the leavening dough pieces (P) to move them from the inlet (4) to the outlet (5). The transfer elements comprise at least one continuous conveyor (6) at each one of the shelves (3) of the leavening compartment (2), for the independent movement of the pieces of dough (P) of each one of the shelves from the inlet (4) to the outlet (5).

## Description

The present invention relates to an apparatus for leavening pieces of dough for use as food.

Various types of fermentation apparatuses for pieces of dough are known.

A first type of these apparatuses of a known type is the one disclosed in patent FR 2 194 109 or patent GB 985 054.

Patent FR 2 194 109 in particular discloses an apparatus in which the pieces of dough to be leavened are placed inside platforms arranged on movable frames (stacks) with a plurality of levels and are transferred into a leavening compartment. The platforms are moved together by means of chains and similar motion transmission elements and therefore are translated as a unit from the inlet to the outlet, pushing toward the outlet the other stacks of platforms located downstream. In this first known type, the movements of the platforms on a holding plane depend on the movements of the platforms on all the other holding planes, the entire stack of platforms in input being moved toward the outlet of the apparatus.

This first type of apparatuses of a known type in any case is not free from drawbacks, which include the fact that the movement of the platforms, one platform depending on the other, defines the holding time of such platforms inside the leavening compartment and it is therefore not possible to set diversified leavening times for the dough contained therein, for example as a function of the format/weight of such dough.

For obviating the drawbacks observed in these traditional apparatuses of a known type, a second type of leavening apparatus for pieces of dough has been studied which is described in detail in patent EP 876 103, which discloses an apparatus for leavening dough in a plurality of shelves which are mutually superimposed and in which the pieces of dough are arranged on trays, particularly rectangular trays, and in which in each shelf the trays are arranged closely side-by-side in shelving rack sectors.

This second known type of fermentation apparatus has a device for loading a tray, which is located in the first shelving rack sector that lies closest to the loading side; if such tray is moved, all the other trays that lie only on the same shelving rack shelf are moved.

However, even this second known type is not free from drawbacks, among which the fact must be included that despite ensuring that every shelf can be loaded according to holding times inside the compartment independently of the other shelves, it is constrained to the shape and size of the trays.

This second type of leavening apparatus in fact requires all the trays to have the same dimensions, first of all to ensure that the advancement spacing of each tray is constant and to prevent, for example, a tray that is smaller than the others from impeding advancement by a length that is sufficient to unload the last tray that is proximate to the unloading region.

Secondly, furthermore, in order to ensure perfect synchronization of the movement of the loading device and of the corresponding unloading device, respectively for inserting the tray from the loading side and for the corresponding exit of a tray from the unloading side.

These constraints, therefore, cause this second type of leavening apparatuses of a known type to have limited versatility in use.

Moreover, another drawback observed in this type of known apparatus is due to the fact that if it is necessary to interrupt the leavening cycle, for example at the end of the workday, in order to unload the trays full of dough within the leavening compartment, in order to empty such compartment, it is necessary to continue to load empty trays into such compartment and fill the fermentation compartment with such empty trays.

This causes the compartment to be always full of trays, with the consequent possibility of oxidation thereof - due to the moisture content required for leavening that is maintained inside such compartment - , of the formation of molds and the like, due to the permanence of organic material collected therein, such as for example flour or dough pieces accidentally not removed.

The aim of the present invention is to eliminate the above-mentioned drawbacks of the background art, by providing an apparatus for leavening pieces of dough for use as food which allows a flexible management in the management of production changing depending on the type of dough to be leavened, on the size and on the formats of the dough and of the platforms that contain it.

Within this aim, an object of the invention is to provide an apparatus that makes it possible to manage a plurality of formats of platforms simultaneously, without requiring downtimes or stops of the apparatus for the tray changing operations.

Another object of the invention is to provide an apparatus with a plurality of shelves, in which the advancement of the dough to be leavened is independent in the individual shelves, allowing different retention times of the dough inside the leavening compartment from one level to the other, or fraction thereof.

Another object of the apparatus according to the invention is to reduce the maintenance effort for the apparatus and at the same time contain its space occupation.

Another object of the invention is to make it possible to empty the leavening compartment of the shelves, for example during the steps of production end or of apparatus shutdown and the like, protecting them from the risk of oxidation and formation of molds, incrustations of flour and the like on such platforms and on the shelves of the apparatus, and to allow simple and effective sanitizing of the leavening compartment, for example by means of commonly used high-pressure washing systems.

Another object of the invention is to provide an apparatus that is extremely versatile and can be assembled in a modular fashion with lines for the continuous baking of food products in use.

Another object of the present invention is to provide an apparatus which has a structure that is simple, relatively easy to provide in practice, safe to use, effective in operation, and has relatively low costs.

This aim and these and other objects which will become better apparent hereinafter are achieved by the present apparatus for leavening pieces of dough for use as food, which comprises at least one leavening compartment provided with a plurality of shelves, with an inlet for the pieces of dough to be leavened and an outlet for the leavened pieces, means for transferring said leavening dough pieces to move them from said inlet to said outlet, **characterized in that** said transfer means comprise at least one continuous conveyor at each one of said shelves of said leavening compartment, for the independent movement of the pieces of dough of each one of said shelves from said inlet to said outlet.

Further characteristics and advantages of the present invention will become better apparent from the following detailed description of a preferred but not exclusive embodiment of a leavening apparatus for pieces of dough for use as food, illustrated by way of non-limiting example in the accompanying drawings, wherein:

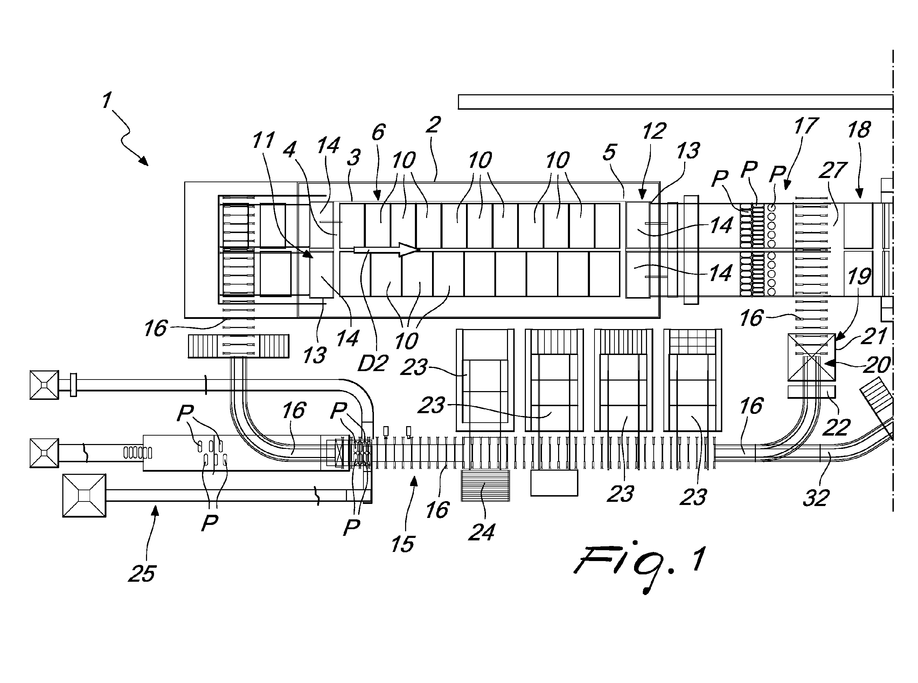

Figure 1 is a schematic plan view of an apparatus for leavening pieces of dough according to the invention;

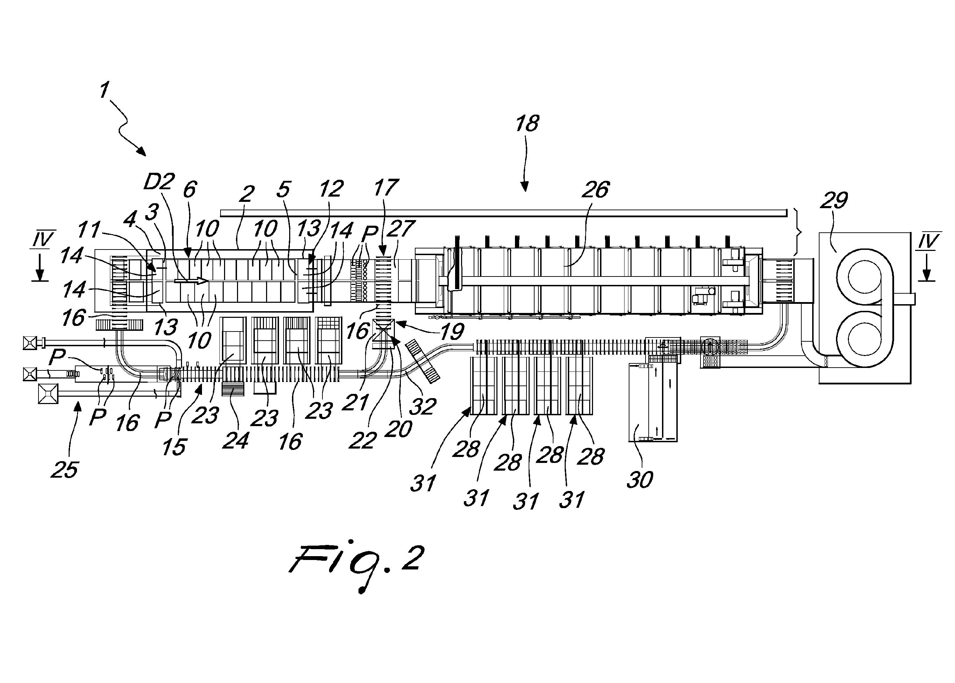

Figure 2 is a schematic plan view of the apparatus of Figure 1 and of a line for baking the pieces of dough, according to the invention;
Figure 3 is a schematic side elevation view of Figure 2;
Figure 4 is a schematic sectional side view, taken along the line IV-IV of Figure 2.

With reference to the figures, the reference numeral 1 generally designates an apparatus for leavening pieces of dough for use as food, generally designated by the reference letter P.

The apparatus 1 comprises at least one leavening compartment 2, which is provided with a plurality of shelves 3, which are mutually superimposed along a stacking direction D1.

In particular, the apparatus 1 comprises nine shelves 3.

The leavening compartment 2 comprises an inlet 4 for the pieces of dough P to be leavened and an outlet 5 for such pieces when leavened.

Further, the apparatus 1 comprises means for transferring the pieces of dough P being leavened in order to move them, for example along a direction D2 which is substantially perpendicular to the stacking direction D1, from the inlet 4 to the outlet 5.

In particular, the transfer means comprise at least one continuous conveyor 6 at each shelf 3 of the leavening compartment 2, for the independent movement of the pieces of dough P of each one of such shelves along the direction D2, from the inlet 4 to the outlet 5.

Advantageously, each continuous conveyor 6 comprises at least one roller conveyor, which comprises at least one roller 7 motorized by motor means 8, each one being independent of the others, and at least one plurality of driven rollers 9, which are associated rotatably with the leavening compartment 2 at each one of such shelves and form respective surfaces for the support and advancement, for example along the direction D2, of the pieces of dough P for the controlled advancement of such leavening pieces of dough from the inlet 4 to the outlet 5.

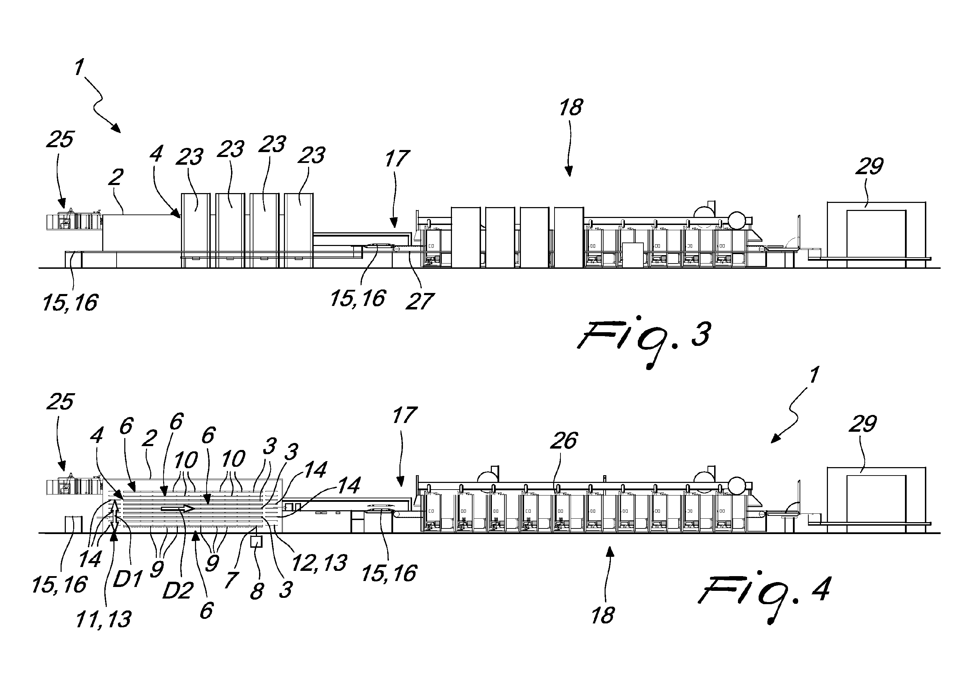

Figure 4 shows only schematically the motor means 8, the driven roller 7 and the respective driven rollers 9 of a single shelf 3 (the lowest one), although all the shelves 3 of the leavening compartment 2 have identical roller conveyors 6, each of which, as mentioned, is provided with motor means 8, a motorized roller 7 and corresponding driven rollers 9 which rotate independently shelf by shelf.

The apparatus 1 further comprises a control and management unit - not shown in the figures, since it is of the type of a conventional electronic board - for each one of the motor means 8 to manage the rotation rate of the respective motorized rollers 7 and advance the pieces of dough P independently in each shelf 3 of the leavening compartment 2.

Further, the leavening compartment 2 can comprise corridors for the inspection and maintenance of such leavening compartment and channels for distributing and recovering the air inside the leavening compartment 2 in order to maintain the thermal and hygrometric conditions that are optimum for the leavening of the pieces of dough P within such leavening compartment.

The apparatus 1 advantageously comprises a plurality of platforms 10 for accommodating the pieces of dough P, which are adapted to be arranged so as to rest on each one of the shelves 3, advancing on the supporting and advancement plane defined by the driven rollers 9 and by the respective motorized roller 7 of each shelf 3.

In particular, the platforms 10 have any shape and size depending on the format of the pieces of dough P to be leavened, and platforms 10 having different formats and dimensions can be made to advance on the same roller conveyor.

By way of non-limiting example, data are provided related to platforms 10 in commercial use, which can be used simultaneously or not, without constraints of any type: rectangular flat platforms, 900 x 1600 mm; rectangular flat platforms, 1100 x 1600 mm; platforms with pockets; platforms of various formats.

It is further possible to vary, depending on the format and type of the dough, as well as on the dimensions of the pieces of dough P and of the platforms 10, the retention time within the leavening compartment 2 of the pieces of dough to be leavened.

For example, in a preferred embodiment, the apparatus 1 comprises one or more actuators, which are not shown in the figures since they are of a type that is known to the person skilled in the art, are functionally connected to the management and control unit, and are arranged on each shelf (so that they can move between a configuration of interference with the line of advancement of the platforms 10 and a configuration of non-interference with it) so as to slow down and/or stop the stroke of the platforms 10 from the inlet 4 to the outlet 5, so as to manage the leavening time of the pieces of dough P independently in each shelf 3 of the leavening compartment 2.

In this embodiment, when the platforms 10 are stopped by the actuators, means for disengaging the motorized roller 7 from the driving shaft of the motor means 8, for example of the friction type, allow rotational disengagement between such rotating elements, allowing the portion of the motorized roller 7 and the driven rollers 9 of the corresponding shelf 3 in contact with such stopped platforms to idle.

However, different embodiments of the apparatus 1 are not excluded, for example, in which the management of the leavening time of the pieces of dough P, independently in each shelf 3, is achieved by variation of the speed of the individual motor means 8 on each shelf 3.

The apparatus 1 comprises means 11 for loading the platforms 10 at the inlet 4 in order to load them onto each one of the shelves 3 and means 12 for unloading the platforms at the outlet 5, in order to unload the shelves 3 from them once the leavening cycle has ended inside the leavening compartment 2.

The loading means 11 and the unloading means 12 comprise respectively a loading-unloading lifter 13, which comprises a plurality of collecting elements 14, and means for the translational motion of the collecting elements 14 along a direction (parallel to the stacking direction D1) which is substantially perpendicular to the advancement direction of the platforms 10 from the inlet 4 to the outlet 5, for the alignment of each collecting element 14 with the respective shelf 3.

The loading means 11 and the unloading means 12 further comprise respective advancement means, which are not shown since they are of the type of conventional motorized roller beds, respectively for the advancement of the platforms 10 from being supported by the collecting elements 14 (of the loading means 11) toward their being supported by the driven rollers 9 of the respective shelf 3 for which they are intended and, vice versa during unloading, from being supported by the shelves 3 to being supported by the collecting element 14 (of the unloading means 12) related to such shelf.

In particular, the advancement means comprise a roller bed for each loading-unloading lifter 13, which can move with a substantially vertical translational motion to be arranged laterally adjacent to the shelf 3 to be loaded/unloaded.

The apparatus 1 comprises conveyance means 15 for the return of the platforms 10 from the outlet 5 to the inlet 4, which are arranged outside the leavening compartment 2 for the transport of the platforms from the outlet 5 to the inlet 4; the conveyance means 15 are interposed substantially between such outlet and such inlet downstream of the unloading means 12 and upstream of the loading means 11 in the direction of advancement of such platforms from the outlet 5 to the inlet 4.

The conveyance means 15 comprise at least one belt and/or roller conveyor 16, which forms a surface for the support and movement of the platforms 10 and is connected at the inlet to the unloading means 12 and at the output to the loading means 11.

The respective means for the translational motion of the loading means 11 and of the unloading means 12 are such as to align each collecting element 14 thereof with the support and movement surface formed by the conveyance means 15 and therefore by the belt and/or roller conveyor 16.

The apparatus 1 comprises an assembly 17 for removing the leavened pieces of dough P from the platforms 10, for example of the type of a mechanical arm or a low-profile conveyor belt, which is mounted on a power-assisted truck or the like, which is arranged downstream of the unloading means 12 for removing the pieces of dough P from such platforms and for feeding the pieces of dough, when leavened, to the line 18 for baking them.

The apparatus 1 further comprises means 19 for sterilizing the platforms 10, which are arranged in at least one position which is comprised between a region upstream of the loading means 11 and a region downstream of the unloading means 12 in the direction of advancement of the platforms 10, for example on the conveyance means 15, from the outlet 5 to the inlet 4.

Advantageously, the sterilization means 19 are associated in an upper region with the conveyance means 15 for the continuous sterilization of the platforms 10 that advance on such conveyance means.

The sterilization means 19 comprise for example at least one UVA lamp for sterilizing the platforms 10.

Furthermore, the apparatus 1 comprises means 20 for drying the platforms 10 in output from the leavening compartment 2, which comprise at least one heating booth 21, provided for example with IR lamps, and ventilation, which is arranged above a portion of the means of transport 15 downstream of the unloading means 12, and means 22 for the brushing and residue aspiration of such dried platforms, which are arranged downstream of the drying means 20.

The apparatus 1 comprises at least one magazine 23 of sterilized platforms 10, which is arranged downstream of the sterilization means 19 and upstream of the loading means 11, controlled by two additional superimposed roller beds, one being arranged in an upper region to unload the platforms and recirculate such platforms on the conveyance line 15, the second one being arranged below the first one and being adapted to load such platforms onto the magazine 23.

The apparatus 1 further comprises means 25, for example of the type of hook-and-loop tapes known to the person skilled in the art, for arranging the pieces of dough P on the platforms 10 that are advancing on the conveyance means 15, for feeding and arranging the pieces of dough P on the sterilized platforms 10 in a region located downstream of the magazine 23 and upstream of the loading means 11, such magazine, in addition to being a healthy region for the storage of the platforms 10 at the end of the processing cycle of the apparatus 1, also acts as a buffer for such platforms if the loading times of the pieces of dough P thereon is different from the time required to unload them and sterilize the platforms 10.

The apparatus 1 can be associated directly, by means of the removal assembly 17, with the baking line 18, which comprises at least one oven 26 for continuous baking of the pieces of dough P.

The conveyance means 15 in fact comprise a branch 27 for conveyance of the leavened pieces of dough P removed from the platforms 10 into the oven 26 for baking them.

The baking line comprises, merely by way of example, respective trays 28 for arranging the pieces of dough, which are adapted to be arranged on the refractory plate conveyor of the oven 26 (as an alternative, the leavened dough pieces can be arranged on such refractory plates), means 29 for cooling the baked pieces of dough P arranged downstream of the oven 26, washing means 30, for example of the type of a continuous dishwasher, for the trays 28 and magazines 31 for storing the washed trays.

In one embodiment, the trays 28 and the platforms 10 coincide and the baking line 18 comprises a branch 32 for connection to the conveyance means 15, which is arranged downstream of the storage magazines 31, for introduction of the trays 28 on the belt and/or roller conveyor 16 of such conveyance means downstream of the sterilization means 19.

Generally speaking, the term platform 10 is used to refer to a substantially box-like element that has a structure generally made of metallic material which is provided with pouches/sheet-like elements made of fabric or cloth, on which the pieces of dough P are arranged; the term trays 28 instead refers to substantially box-like structures generally made of metallic material.

The operation of the apparatus according to the present invention is as follows.

The arrangement means 25 load the pieces of raw dough P to be subjected to leavening onto the platforms 10 that advance on the conveyance means 15.

Such conveyance means carry the platforms 10, loaded with the pieces of dough P, at the loading means 11, which thanks to the translational motion means, the collecting means 14 and the loading-unloading lifter 13, load the individual shelves 3 of the leavening compartment 2.

The rollers 9 driven by the respective motorized roller 7 of each shelf 3 cause the advancement of the platform 10, which is progressively loaded from the inlet 4 to the outlet 5 for leavening of the pieces of dough P during the retention time inside such leavening compartment. The platform 10 loaded inside the leavening compartment, at the end of the roller bed of the shelf 3, is blocked by means of the adapted actuators for the set time.

At the outlet 5, the unloading means 12 unload the platforms 10 from the shelves 3, arranging them on the belt and/or roller conveyor 16.

The removal assembly 17 thus draws the pieces of leavened raw dough P and delivers them to the oven 26 for baking.

The platforms 10 on the conveyance means 15, emptied of the product, are sterilized by the sterilization means 19 (dried, brushed and with the residues aspirated) and are made to advance toward the magazine 23 by means of the additional lower roller bed, and/or again toward the arrangement means 25 by means of the additional upper roller bed.

As described earlier, in a first embodiment the removal assembly 17, downstream of the leavening compartment 2, picks up the leavened pieces of dough P, arranging them directly on the refractory plates of the oven 26; or, in a second embodiment, the trays 28 continue from the leavening compartment 2 to the oven 26 for such pieces of dough to be baked. Downstream of the oven 26, the baked pieces of dough P are picked up and any trays 28 are sent to the optional washing means 30 and/or to the storage magazines 31 and/or reintroduced on the conveyance means 15 for subsequent filling by the arrangement means 25.

In practice it has been found that the described apparatus according to the invention achieves the proposed aim and objects, and in particular the fact is stressed that the leavening apparatus according to the invention allows flexible management in the management of production changing, depending on the type of dough to be leavened, on the size and formats of the dough and on the platforms that contain it.

Moreover, the apparatus as described above allows the management of a plurality of formats of platforms simultaneously, without requiring, for the tray changing operations, idle times or steps of stopping the apparatus.

Furthermore, the leavening apparatus according to the invention makes it possible to empty the leavening compartment of the platforms, for example in the steps for stopping the apparatus and the like, protecting them against the risk of oxidation and formation of molds, incrustations of flour and the like on such platforms and on the shelves of the apparatus, and further allows simple and effective sanitizing of such leavening compartment, reducing maintenance efforts, since the roller conveyors of each individual shelf are free from periodic maintenance.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the appended claims.

The disclosures in Italian Patent Application No. M02009A000239 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for leavening pieces of dough (P) for use as food, which comprises at least one leavening compartment (2) provided with a plurality of shelves (3), with an inlet (4) for the pieces of dough (P) to be leavened and an outlet (5) for the leavened pieces, means for transferring said leavening dough pieces (P) to move them from said inlet (4) to said outlet (5), **characterized in that** said transfer means comprise at least one continuous conveyor (6) at each one of said shelves (3) of said leavening compartment (2), for the independent movement of the pieces of dough (P) of each one of said shelves from said inlet (4) to said outlet (5).

2. The apparatus (1) according to claim 1, **characterized in that** each one of said continuous conveyors (6) comprises at least one roller conveyor, which comprises at least one roller (7) motorized by independent motor means (8) and at least one plurality of driven rollers (9), which are associated rotatably with said leavening compartment (2) at each one of said shelves (3) for the controlled advancement of said leavening dough pieces (P) from said inlet (4) to said outlet (5).

3. The apparatus (1) according to one or more of the preceding claims, **characterized in that** it comprises a plurality of platforms (10) for accommodating said pieces of dough (P), which are adapted to be arranged so as to rest on each one of said shelves (3).

4. The apparatus (1) according to one or more of the preceding claims, **characterized in that** it comprises actuators arranged on each one of said shelves (3) for slowing and/or stopping the stroke of said platforms (10) from said inlet (4) to said outlet (5), and at least one management and control unit, which is functionally connected to at least said actuators for the management of the leavening time of said dough pieces (P) independently on each shelf (3) of said leavening compartment (2).

5. The apparatus (1) according to one or more of claims 1 to 3, **characterized in that** it comprises at least one unit for the management and control of at least said motor means (8) for managing the leavening time of said dough pieces (P) independently on each shelf (3) of said leavening compartment (2).

6. The apparatus (1) according to one or more of the preceding claims, **characterized in that** it comprises means (11) for loading said platforms (10) at said inlet (4) and means (12) for unloading said platforms (10) at said outlet (5).

7. The apparatus (1) according to one or more of the preceding claims, **characterized in that** it comprises means (19) for sterilizing said platforms (10), which are arranged in at least one position comprised between a region that lies upstream of said loading means (11) and a region that lies downstream of said unloading means (12) in the direction of advancement of said platforms (10) from said outlet (5) to said inlet (4).

8. The apparatus (1) according to one or more of the preceding claims, **characterized in that** it comprises means (15) for conveying said platforms (10) which are arranged outside said leavening compartment (2) for their conveyance from said outlet (5) to said inlet (4), said conveyance means (15) being substantially interposed downstream of said unloading means (12) and upstream of said loading means (11) in the direction of advancement of said platforms (10) from said outlet (5) to said inlet (4), said sterilization means (19) being associated with said conveyance means (15).

9. The apparatus (1) according to one or more of the preceding claims, **characterized in that** it comprises means for storing said platforms (10) which are associated with said conveyance means (15) and are arranged outside said leavening compartment (2) downstream of said sterilization means (19) for the storage of said sterilized platforms (10) outside of said leavening compartment.
